# EUROPÄISCHE PATENTANMELDUNG

(11) **EP 1 387 299 A2**
(43) Veröffentlichungstag der Anmeldung: **04.02.2004**
(21) Anmeldenummer: 03102361.7
(22) Anmeldetag: 30.07.2003
(51) Int. Cl.: G06F 17/30

(54) **Verfahren zum Betreiben einer interaktiven Zeitung**

(30) Priorität: 30.07.2002 DE 10234767
(71) Anmelder: Dilmaghani, Malek Eskandar, 27607 Langen (DE)
(72) Erfinder: Dilmaghani, Malek Eskandar, 27607 Langen (DE)
(74) Vertreter: Meissner, Bolte & Partner

(57) **Zusammenfassung**

Papiergebundene Zeitungen sind aufwendig in der Distribution. Videotext und Internetzeitungen sind kompliziert und unkoordinierbar in der Anwendung. Es ergibt sich eine komfortable und einfach koordinierbare interaktive Zeitung, wenn Informationen mehrerer wiederzugebender Bereiche von einer Bereitstellungseinheit (10) an eine Wiedergabeeinheit (12) bei einem Nutzer übertragen, Informationen zur Darstellung eines ausgewählten Bereichs ausgewählt werden, der ausgewählten Bereich auf einer Wiedergabeeinheit wiedergegeben wird, und die Informationen der mehreren Bereiche mittels einer Verknüpfung fest miteinander verknüpft sind.

## Beschreibung

Die Erfindung betrifft ein Verfahren zum Betreiben einer interaktiven Zeitung, bei dem Informationen mehrerer wiederzugebender Bereiche von einer Bereitstellungseinheit an eine Wiedergabeeinheit bei einem Nutzer übertragen werden, bei dem Informationen zur Darstellung eines ausgewählten Bereichs ausgewählt werden, und bei dem der ausgewählten Bereich auf einer Wiedergabeeinheit wiedergegeben wird.

Üblicherweise werden heute Zeitungen in Papierform verteilt. Der Nutzer kann hierbei ein Abonnement eingehen oder am Kiosk aus einer Auswahl bereitgestellter Zeitungen eine Zeitung auswählen. Der Nutzer kann seinen Neigungen entsprechend nach Belieben die Inhalte der Zeitung entnehmen. Großer Beliebtheit erfreuen sich Zeitungen, die bereits morgens zum Frühstück gelesen werden können. Insbesondere hierfür ist ein großer Aufwand erforderlich, damit die Zeitungen mit aktuellen Inhalten morgens bereits beim Nutzer verfügbar sind. Als alternative Informationsquellen gibt es Videotext sowie die Verbreitung von Informationen über das Internet. Beim Videotext sind verhältnismäßig lange Zeiten zum Aufbau einer Seite erforderlich, was dieses Informationsmedium verhältnismäßig unkomfortabel macht. Bei der Informationsbeschaffung über das Internet dauert der Seitenaufbau je nach der zur Verfügung stehenden Übertragungsgeschwindigkeit immer noch verhältnismäßig lange. Insbesondere ist das sogenannte Surfen durch die Internetinhalte beim Aufsuchen bestimmter Informationen verhältnismäßig unkomfortabel. Ein weiteres Problem ist, daß sich Zeitungen fast ausschließlich über Werbung finanzieren. Zu diesem Zweck ist es für die Berechnung der Kosten für die Werbung unerläßlich, die Auflagenstärke und die Beachtung zu kennen, die bestimmte Teile der Zeitung erhalten werden. Die auf Internetseiten vorhandene Werbung wird häufig als Belästigung empfunden und weggeklickt. Aus diesen Gründen ist das Internet bis heute nicht zu einer nennenswerten Konkurrenz für herkömmliche Zeitungen in Papierform geworden.

Das der Erfindung zugrundeliegende Problem ist es, ein Verfahren zum Betreiben einer interaktiven Zeitung anzugeben, mit dem sich ein Nutzer auf komfortable Weise Informationen derart beschaffen kann, wie er es bisher von seiner papiergebundenen Zeitung gewohnt war. Gleichzeitig soll eine Möglichkeit geschaffen werden, daß Werbung vom Konsumenten zwangsläufig aufgenommen wird, ohne als aufdringlich empfunden zu werden.

Zur Lösung des Problems werden bei dem Verfahren der eingangs genannten Art die Informationen der mehreren Bereiche mittels einer Verknüpfung fest miteinander verknüpft.

Diese feste Verknüpfung ermöglicht es, daß der Nutzer auf komfortable Weise die Zeitung wie bei der papiergebundenen Form "durchblättern" kann, ohne daß für den Aufbau der einzelnen Seiten, nämlich für die Darstellung des jeweils ausgewählten Bereichs, jeweils größerer Zeitaufwand erforderlich ist. Der Nutzer kann mit geringem Aufwand auf seiner Wiedergabeeinheit eine Zeitung in einer Form betrachten, wie er sie von seiner papiergebundenen Form kennt. Als Wiedergabeeinheit eignet sich beispielsweise ein konventioneller Bildschirm oder ein Fernsehgerät. Die Verknüpfung ermöglicht es außerdem, daß Werbung zwangsläufig vor der Wiedergabe eines ausgewählten Bereiches konsumiert werden muß. Dies kann aber ohne großen Zeitaufwand und unaufdringlich erfolgen.

Bei einer Weiterbildung der Erfindung verknüpft die Verknüpfung die Informationen zu einem Dokument ähnlich dem Desktop Publishing (DTP). Dieses im folgenden als Desktop Audio/Video (DTA/V) bezeichnete Dokument liefert eine komfortable Plattform für das Betreiben der interaktiven Zeitung. Auf diese Weise werden aus dem Verlagswesen bekannte und bewährte Verfahren auch auf den Bereich eines mittels elektronischer Distributionskanäle verteilten Mediums übertragen. Vorzugsweise hat die Verknüpfung Schnittstellen für verschiedene Text-, Audio- und Videoformate. Wenn die Verknüpfung außerdem horizontal ist, erhöht sich der Bedienkomfort für den Nutzer. Im Gegensatz zu den vertikalen Strukturen bei der Internetrecherche, bei der ein Nutzer schnell die Übersicht darüber verlieren kann, wo er sich gerade befindet und wo er eigentlich gerade sein wollte, läßt diese horizontale Verknüpfung eine einfache und schnelle Orientierung zu.

Eine andere Weiterbildung der Erfindung zeichnet sich dadurch aus, daß die Informationen mittels einer breitbandigen Verbindung übertragen werden. Auf diese Weise können die für das Betreiben der interaktiven Zeitung erforderlichen Informationen innerhalb kurzer Zeit übertragen werden. Die breitbandige Verbindung kann eine Verbindung mittels Kabel oder Satellit sein. Diese Verbindung über Kabel oder Satellit ermöglicht es, etwa 1.000 Seiten Zeitungsinhalt millionenfach in etwa einer Sekunde Übertragungszeit übertragen zu lassen. Die Informationen können beispielsweise auch als Fernsehbilder übertragen werden. Dies ermöglicht eine Übertragung von derzeit 25 Bildern pro Sekunde, wobei jedes Bild etwa einer Zeitungsseite entsprechen kann.

Wenn die verknüpften Informationen auf Speichermitteln gespeichert werden, erfolgt das Abrufen der einmal übertragenen und gespeicherten Informationen durch den Nutzer dann ohne nennenswerte Zeitverzögerung. Dadurch erscheint der Seitenaufbau derart schnell, wie es der Nutzer auch beim Blättern in einer Zeitung erwartet. Insbesondere erweist sich Werbung als weniger störend, weil durch das Wiedergeben der Werbung durch die Wiedergabeeinheit keine nennenswerte Zeitverzögerung auftritt. Hierbei ist es zweckmäßig, wenn die Informationen zu einer vorgegebenen ersten Zeit übertragen werden. Wenn die vorgegebene Zeit dann frühmorgens ist, können die Nutzer zum Frühstück bereits ihre gewünschte Zeitung lesen, ohne daß der hohe logistische Aufwand zum Verteilen der Zeitung erforderlich ist.

Eine weitere Ausführungsform der Erfindung zeichnet sich dadurch aus, daß der Nutzer mittels Auswahlmitteln einen Bereich als ausgewählten Bereich auswählt. Die Auswahlmittel können eine Fernbedienung oder eine Tastatur sein. Das Auswählen der Informationen mittels der Fernbedienung erfordert keine Umgewöhnung bei nicht mit Computern vertrauten Nutzern. Eine Tastatur ermöglicht es, beispielsweise Kreuzworträtsel interaktiv auszufüllen.

Bei einer anderen Ausführungsform werden bei einer neuen Auswahl eines Bereiches gemeinsame Elemente beibehalten und nur neu wiederzugebende Elemente neu wiedergegeben. Dies beschleunigt die Wiedergabe einer Auswahl des ausgewählten Bereichs. Aus der Bildbearbeitung ist es bekannt, die bearbeiteten Bereiche mosaikartig zu verschieben. Bei der erfindungsgemäßen Ausführungsform ist auch die Wiedergabe einer Videodatei in einem sonst unverändert wiedergegebenen Bereich möglich.

Eine andere Weiterbildung der Erfindung zeichnet sich dadurch aus, daß Nutzerdaten mittels einer schmalbandigen Rückverbindung von der Wiedergabeeinheit an die Bereitstellungseinheit übertragen werden. Diese Nutzerdaten können beispielsweise Abrechnungsdaten sein, mittels derer die übertragenen Informationen und/oder die wiedergegebenen Informationen bezahlt werden. Die Nutzerdaten können jedoch auch Anforderungsdaten zum Anfordern der Übertragung von Informationen sein. Diese schmalbandige Rückverbindung ermöglicht eine interaktive Einflußnahme des Nutzers auf das Geschehen. Als schmalbandiger Rückkanal sind beispielsweise SMS, GMS Data Service und insbesondere auch GPRS möglich. Auf diese Weise entsteht durch den Rückkanal kein Verdrahtungsaufwand beim Nutzer.

Bei einer anderen Weiterbildung der Erfindung werden Informationen für mehrere interaktive Zeitungen übertragen, wobei der Nutzer mittels der Auswahlmittel eine interaktive Zeitung auswählt. Auf diese Weise kann der Nutzer eine Zeitung wie in einem Kiosk aus verschiedenen Angeboten auswählen. Hierbei sollte ein Bezahlen nach den ausgewählten Inhalten und nicht nach den übertragenen Inhalten erfolgen.

Bei einer anderen Weiterbildung der Erfindung wird mittels eines der Wiedergabeeinheit zugeordneten GPS-Modules die Position der Wiedergabeeinheit bestimmt und abhängig von diesem Bestimmen lokalgültige Informationen übertragen. Diese Kenntnis der Position der Wiedergabeeinheit ermöglicht es, einem Lokalteil zugeordnete Informationen, lokal abgestimmte Kleinanzeigen und auch lokal spezifische Werbung in die interaktive Zeitung zu integrieren.

Vorzugsweise ist auch eine Suchmaschine vorgesehen, mittels derer eine Auswahl der wiedergegebenen Informationen getroffen wird. Diese Suchmaschine kann zum Beispiel zum Selektieren der Kleinanzeigen, wie beispielsweise des Mietmarktes, des Immobilienmarktes, des Stellenmarktes und der Verkäufe oder Ankäufe dienen.

Besonders komfortabel gestaltet sich die interaktive Zeitung, wenn das Auswählen der Informationen mittels einer Navigationshilfe erfolgt. Als Navigationshilfe kann beispielsweise das Auswählen aus einem Inhaltsverzeichnis oder auch bei einer Fernsehzeitschrift eine Programmübersicht dienen, aus der dann Auswahlen möglich sind. Das Bezahlen sollte mittels einer in einen der Wiedergabeeinheit zugeordneten Kartenleser eingeführten Geldkarte oder Kreditkarte erfolgen. Beim Verwenden einer Geldkarte kann dann der erforderliche Betrag nach dem Prinzip des "Cash and Carry" direkt an eine beispielsweise dem Kiosk oder einem Abonnementgeber zugeordnete Händlergeldkarte übertragen werden.

Eine Ausführungsform der Erfindung zeichnet sich dadurch aus, daß die ausgewählten Informationen nach aktiven Elementen durchsucht werden, und daß beim Vorhandensein eines aktiven Elementes dieses ausgeführt wird. Wenn hierbei also beispielsweise bei den ausgewählten Informationen eine bewegte Graphik erkannt wird, wird diese auf dem Bildschirm als bewegte Graphik dargestellt. Dies gibt beispielsweise einer Werbungsanzeige die Möglichkeit, eine bewegte Graphik als Blickfang einzubinden. Außerdem ist es möglich, beim Vorhandensein einer Werbeanzeige auf dem Bildschirm im Hintergrund einen akustischen Werbetrailer ablaufen zu lassen. Beim Vorhandensein einer Werbeanzeige auf dem Bildschirm kann diese auch als Audio/Video-Sequenz ähnlich einem Werbetrailer im Fernsehen ablaufen. Es ist auch beispielsweise möglich, Schlagzeilen besonders hervorzuheben, indem diese beispielsweise vorgelesen werden. Ebenfalls kann eine akustische Begrüßung erfolgen.

Bei einer anderen Weiterbildung sind in den ausgewählten Informationen enthaltene ausführbare Elemente mittels Auswahl mit den Auswahlmitteln ausführbar. Beispielsweise kann hierbei eine Bildgeschichte oder ein Videofilm ausgeführt werden. Dies ermöglicht die Einbindung von Filmbeiträgen in die interaktive Zeitung. Eine Geschichte, insbesondere eine Fortsetzungsgeschichte, kann auch ähnlich wie bei einem Hörbuch vorgelesen werden. Es ist außerdem das Herstellen einer E-Mail-Verbindung oder das Einbinden einer Internetseite auf diese Weise möglich.

Ein weiterer Vorteil für den Nutzer ist es, wenn vor dem Ausführen eines kostenpflichtigen Elementes eine kostenlose Vorschau erfolgt. Beispielsweise kann vor dem Abrufen eines kostenpflichtigen Filmes aus einer elektronischen Programmübersicht ein kostenloser Videotrailer als Vorschau gezeigt werden.

Die Erfindung läßt sich besonders vorteilhaft mit dem technischen Aufbau eines sogenannten virtuellen Einkaufszentrums (VEC) realisieren, wie es in der deutschen Patentanmeldung mit dem Aktenzeichen 101 63 298.3 beschrieben ist, auf die hiermit in vollem Umfang Bezug genommen wird.
Im folgenden wird ein Ausführungsbeispiel der Erfindung anhand der Zeichnungen näher erläutert. Es zeigen:
- Fig. 1: eine schematische Darstellung der Basiskomponenten zum Durchführen des Verfahrens mit den Erfindungsmerkmalen,
- Fig. 2: ein Blockdiagramm für ein Verfahren mit den Erfindungsmerkmalen,
- Fig. 3: ein Blockdiagramm mit den Verfahrensschritten für das Wiedergeben,
- Fig. 4: eine Darstellung einer Zeitungsseite mit aktiven und ausführbaren Elementen,
- Fig. 5: eine Darstellung einer weiteren Zeitungsseite, die ebenfalls aktive und ausführbare Elemente enthält, und
- Fig. 6: eine schematische Darstellung eines kompletten DTA/V Dokumentes mit den Zeitungsseiten von Fig. 4 und 5.

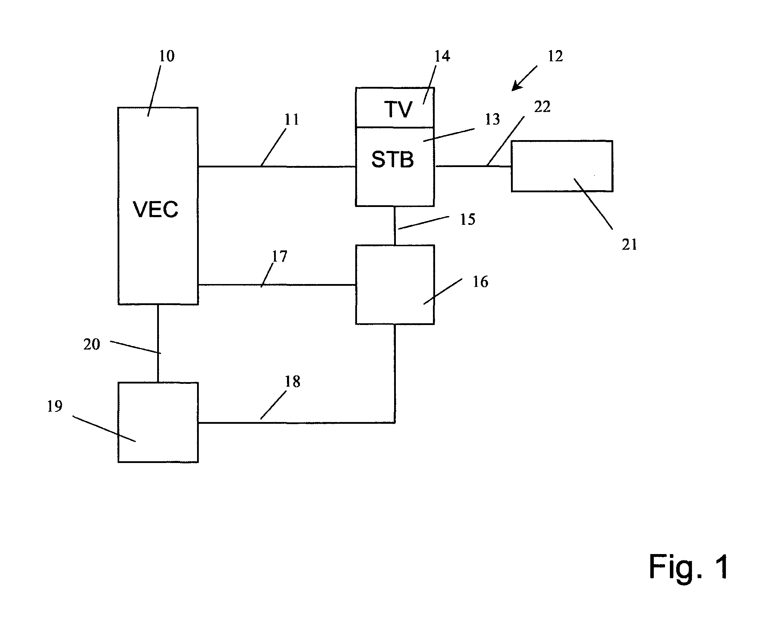

Fig. 1 zeigt eine schematische Darstellung der Basiskomponenten zum Durchführen des Verfahrens mit den Erfindungsmerkmalen. Eine Bereitstellungseinheit 10 ist mittels einer breitbandigen Verbindung 11 mit einer Endgeräteanordnung 12 verbunden, die im vorliegenden Ausführungsbeispiel als Wiedergabeeinheit 12 dient. Bei der Bereitstellungseinheit 10 handelt es sich um ein sogenanntes virtuelles Einkaufszentrum (VEC). Die breitbandige Verbindung 11 kann eine Verbindung via Satellit oder Kabel sein. Zur besseren Übersicht sind die einzelnen Komponenten der breitbandigen Lieferverbindung 11, wie beispielsweise eine Sendestation, nicht in der Figur dargestellt. Die Wiedergabeeinheit 12 weist eine sogenannte Set-Top-Box 13 und ein daran angeschlossenes Fernsehgerät 14 auf, die bei einem Nutzer angeordnet sind. In der Figur außerdem dargestellt sind Auswahlmittel 21, die mittels einer Verbindung 22 mit der Wiedergabeeinheit 12, nämlich der Set-Top-Box 13, verbunden sind. In der Figur sind die Auswahlmittel 21 stellvertretend für eine Fernbedienung oder eine Tastatur dargestellt. Die Verbindung 22 kann eine Kabelverbindung, eine Infrarotverbindung oder eine Funkverbindung sein. Die Set-Top-Box 13 ist mittels einer schmalbandigen Verbindung 15 mit einer Vermittlungsstelle 16 verbunden. Bei dem dargestellten Ausführungsbeispiel ist die schmalbandige Verbindung 15 eine Mobilfunkverbindung mittels SMS. Es kann aber auch eine normale Telefonverbindung, eine Verbindung mittels GMS Data Service oder mittels GPRS verwendet werden. Die Vermittlungsstelle 16 ist stellvertretend für eine oder mehrere Vermittlungsstellen des öffentlichen Telekommunikations- oder Mobilfunknetzes dargestellt, die gerade verwendet werden. Die Vermittlungsstelle 16 ist mittels einer ersten Rückverbindung 17 mit der Bereitstellungseinheit 10 und mittels einer zweiten Rückverbindung 18 mit einer Verrechnungseinheit 19 verbunden. Die Rückverbindungen 17, 18 sind schmalbandig ähnlich der Verbindung 15. Im einzelnen werden in der Fig. 1 für die Rückverbindungen 17, 18 ebenfalls SMS verwendet. Die Verbindungen 15, 17, 18 sind bidirektional ausgebildet.

Die Verrechnungseinheit 19 ist ein Zahlungsserver eines Kreditinstitutes. Sie ist mittels einer weiteren Verbindung 20 mit dem virtuellen Einkaufszentrum 10 verbunden. Die weitere Verbindung 20 ist für den Betrieb der interaktiven Zeitung mit den Erfindungsmerkmalen allerdings nicht erforderlich. Die Kommunikation zwischen der Verrechnungseinheit 19 und der Bereitstellungseinheit 10 kann auch über die Verbindung 17, 18 und die Vermittlungsstelle 16 erfolgen.

Die Bereitstellungseinheit 10 kann außerdem eine Reihe nicht in der Figur dargestellter Lieferverbindungen zu Lieferanten, wie beispielsweise Zeitungshäusern, haben.

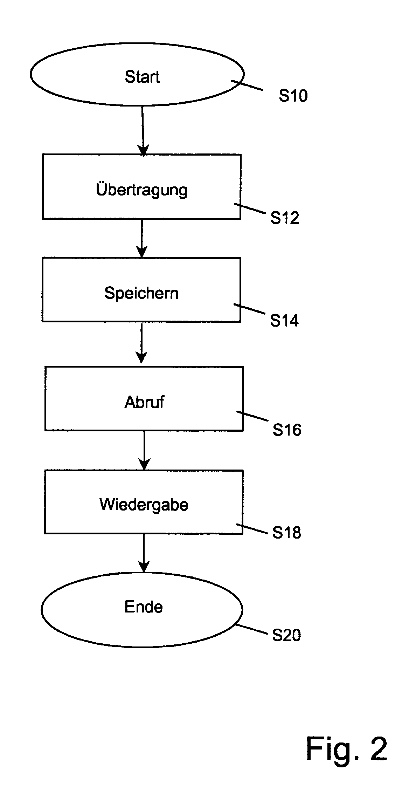

Fig. 2 zeigt ein Blockdiagramm für ein Verfahren mit den Erfindungsmerkmalen. Im Schritt S10 wird das Verfahren begonnen. Als erstes erfolgt dann in Schritt S12 die Übertragung von Informationen von der Bereitstellungseinheit 10 über die breitbandige Verbindung 11 zu der Wiedergabeeinheit 12, nämlich zu der Set-Top-Box 13. Diese Übertragung kann zu einer vorgegebenen Uhrzeit früh am Morgen, beispielsweise um 4:00 Uhr morgens, erfolgen. Anschließend geht es in Schritt S14 weiter. In Schritt S14 erfolgt das Speichern der in Schritt S12 übertragenen Informationen auf einem der Wiedergabeeinheit zugeordneten Massenspeicher. Bei dem in Fig. 1 gezeigten Ausführungsbeispiel weist die Set-Top-Box 13 einen Massenspeicher, nämlich eine Festplatte, auf. Die so frühmorgens übertragenen Informationen sind dann auf der Festplatte gespeichert und jederzeit von dem Nutzer abrufbar. Es folgt Schritt S16.

In Schritt S16 wählt der Nutzer die von ihm gewünschten Informationen mittels der Auswahlmittel 21 aus. Dieser Abruf kann zu einer beliebigen späteren Zeit als das Übertragen und Speichern in den Schritten S12 und S14 erfolgen. Zum Abrufen kann der Nutzer mit der Fernbedienung 21 über die Infrarotverbindung 22 die entsprechenden gespeicherten Inhalte von der Set-Top-Box 13 abrufen. Es geht weiter mit Schritt S18.

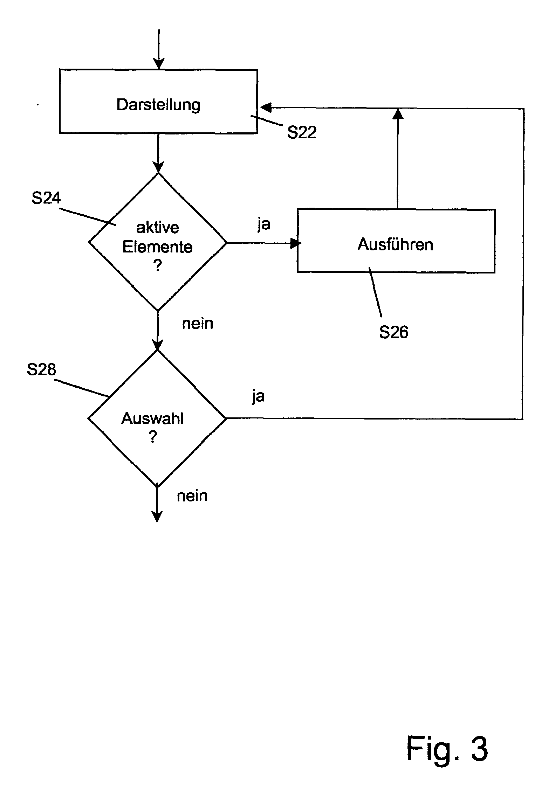

Im Schritt S18 werden die in Schritt S16 von der Festplatte der Set-Top-Box 13 abgerufenen Inhalte auf dem Fernsehgerät 14 wiedergegeben. Die einzelnen Abläufe des Schrittes S18 werden nachfolgend anhand von Fig. 3 beschrieben. Im Anschluß an den Schritt S18 folgt im Schritt S20 das Ende des Verfahrens.

Fig. 3 zeigt ein Blockdiagramm mit den Verfahrensschritten für die Wiedergabe in Schritt S18 von Fig. 2. Zunächst erfolgt in Schritt S22 die Darstellung der in Schritt S16 abgerufenen Informationen auf dem Fernsehgerät 14. Anschließend wird in Schritt S 24 von einer Schaltung in der Set-Top-Box 13 überprüft, ob die ausgewählten und in Schritt S22 dargestellten Informationen aktive Elemente enthalten. Als aktive Elemente sind hierbei solche Elemente zu verstehen, die bei der Darstellung ohne weitere Aufforderung direkt ausgeführt werden sollen. Dies können beispielsweise bewegte Graphiken, das Vorlesen oder akustische Anzeigen von Schlagzeilen, das Einspielen von akustischen Werbesequenzen im Hintergrund, das Ausführen von Werbetrailern als AudioNideo-Sequenzen in einem Fenster sein. Dieses Ausführen aktiver Elemente erfolgt beim Erkennen derselben in Schritt S26. Werden keine aktiven Elemente in Schritt S24 erkannt, folgt als nächstes Schritt S28.

Im Schritt S28 erfolgt die Auswahl ausführbarer Elemente unter den dargestellten Informationen. Hierbei kann es sich beispielsweise um einen Audiobeitrag, wie zum Beispiel Hintergrundmusik oder das Vorlesen eines Hörbuches, einen Audiound/oder Videobeitrag, wie beispielsweise eine Filmsequenz, das Herstellen einer E-Mail-Verbindung oder das Aufrufen einer Internetseite handeln. Es kann hierbei auch aus einer elektronischen Programmübersicht ein Film ausgewählt werden. Falls die in Schritt S28 getroffene Auswahl kostenpflichtig ist, erfolgt in Schritt S28 ebenfalls das Bezahlen mittels einer in einen Kartenleser der Set-Top-Box 13 eingeführten Geldkarte oder Kreditkarte. Zu diesem Zweck werden Bezahlsignale über die schmalbandige Verbindung 15 und 18 an die Verrechnungseinheit 19 übertragen. Diese Verrechnungseinheit 19 führt im Falle der Zahlung mittels Geldkarte direkt das Übertragen des Guthabens von der Geldkarte auf eine Händlergeldkarte durch. Im Falle der Kartenzahlung mittels Kreditkarte wird von der Verrechnungseinheit 19 die erforderliche Verbuchung durchgeführt. Anschließend folgt dann die Darstellung der ausgewählten Inhalte in Schritt S22. Wenn im Schritt S28 keine Auswahl getroffen wird, folgt als nächstes in Schritt S20 von Fig. 2 der Abbruch des Verfahrens.

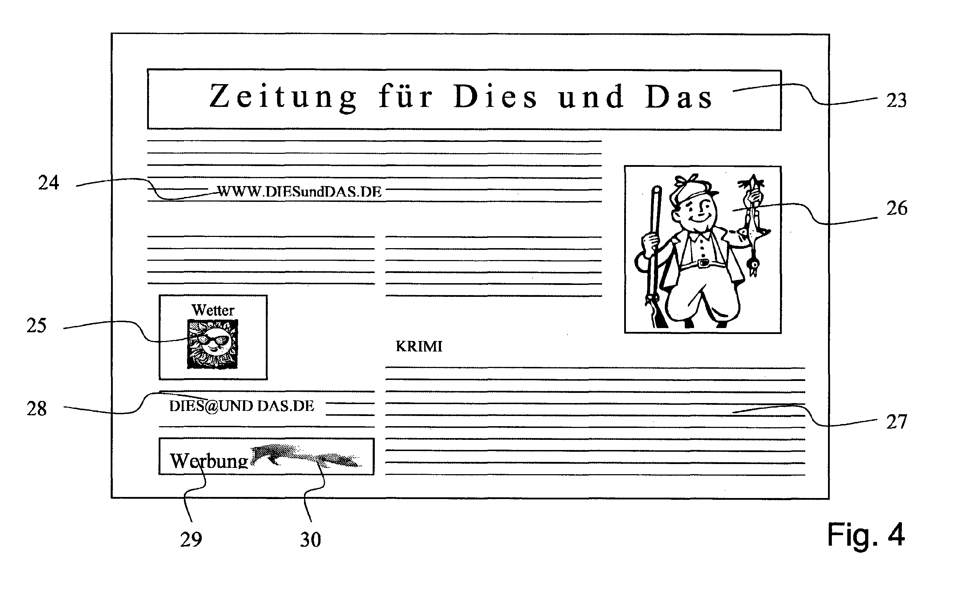

Fig. 4 zeigt eine Darstellung einer Seite oder eines Seitenabschnittes der interaktiven Zeitung mit den Erfindungsmerkmalen. Im oberen Bereich ist eine Schlagzeile 23 angeordnet. Die Schlagzeile 23 kann bei ihrem Erkennen in Schritt S24 beispielsweise von einer akustischen Begrüßung begleitet werden. Im Bereich links unter der Schlagzeile 23 ist eine Internetadresse 24 dargestellt. Durch Auswählen der Internetadresse 24 im Schritt S28 kann die Verbindung zu der Internetseite hergestellt werden. Auf ähnliche Weise kann mittels Auswahl der Graphik 25 ebenfalls auf die zugehörige Internetseite umgeleitet werden. Im rechten Bereich von Fig. 4 ist unterhalb der Schlagzeile 23 ein Bild 26 dargestellt. Bei Auswahl des Bildes 26 in Schritt S28 wird ein zugehöriger Videofilm abgespielt. Es kann sich hierbei um einen Film mit oder ohne Ton handeln. Es ist beispielsweise ein Filmbericht zu einer auf der Seite angeordneten Reportage möglich.

Unterhalb des Bildes 26 ist ein Artikel 27 abgebildet. Durch Auswahl des Artikels 27 in Schritt S28 kann dieser Artikel 27 ähnlich einem Hörbuch vorgelesen werden. Auf der linken Seite von Fig. 4 ist unter der Graphik 25 eine E-Mail-Adresse 28 angegeben. Durch Auswahl der E-Mail-Adresse 28 kann eine E-Mail an die E-Mail-Adresse 28 versandt werden. Unter der E-Mail-Adresse 28 ist am linken unteren Ende von Fig. 4 eine Werbeanzeige 29 schematisch dargestellt. Die Werbeanzeige 29 besitzt ein aktives Element 30. Das aktive Element 30 ist in diesem Fall eine bewegte Graphik. Beim Erkennen der bewegten Graphik 30 in Schritt S24 wird diese ausgeführt. Bei dem in Fig. 4 gezeigten Beispiel handelt es sich beispielsweise um ein sich bewegendes Tier.

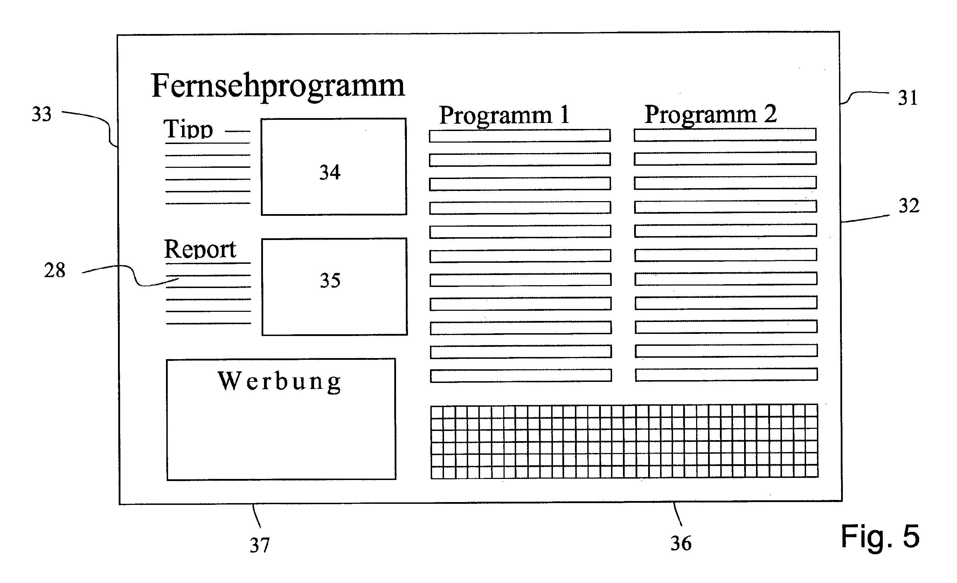

Fig. 5 zeigt eine Darstellung einer weiteren Seite einer interaktiven Zeitung mit den Erfindungsmerkmalen. Die in Fig. 5 dargestellte Zeitungsseite weist einen elektronischen Programmführer 31 auf, der mehrere Programmeinträge 32 hat. Außerdem sind im linken Bereich von Fig. 5 mehrere Kurzbeschreibungen 33 von Programmteilen abgebildet. Der jeweiligen Kurzbeschreibung 33 ist jeweils ein Bild 34, 35 zugeordnet, wobei bei Auswahl des Bildes 34, 35 in Schritt S28 jeweils ein zugehöriger Film abgespielt wird. Bei Auswahl eines Programmeintrages 32 erfolgt die jeweilige Anforderung des entsprechenden Filmes über die schmalbandigen Verbindungen 15, 17. Falls es sich dabei um einen kostenpflichtigen Programmbeitrag handelt, wird zunächst eine etwa dreiminütige Vorschau eingespielt. Anschließend werden dem Nutzer auf dem Bildschirm 14 die Kosten für den Abruf dieses Filmes wiedergegeben. Nach einer Bestätigung wird ein Zahlvorgang über die schmalbandige Verbindung 15, 18 und den Bezahlserver 19 durchgeführt. Danach wird der so angeforderte Film über die breitbandige Verbindung 11 übertragen und auf dem Fernsehgerät 14 dargestellt. Unten in der Fig. 5 ist schematisch ein Kreuzworträtsel 36 angedeutet. Das Kreuzworträtsel 36 kann bei Auswahl direkt ausgefüllt werden. Gegebenenfalls ist so über die schmalbandigen Verbindungen 15, 17 die Teilnahme an einer Verlosung möglich. Unten links in Fig. 5 ist ein Werbespot 37 dargestellt. Bei Erkennen dieses Werbespots 37 in Schritt S24 wird dieser gestartet und läuft automatisch ab.

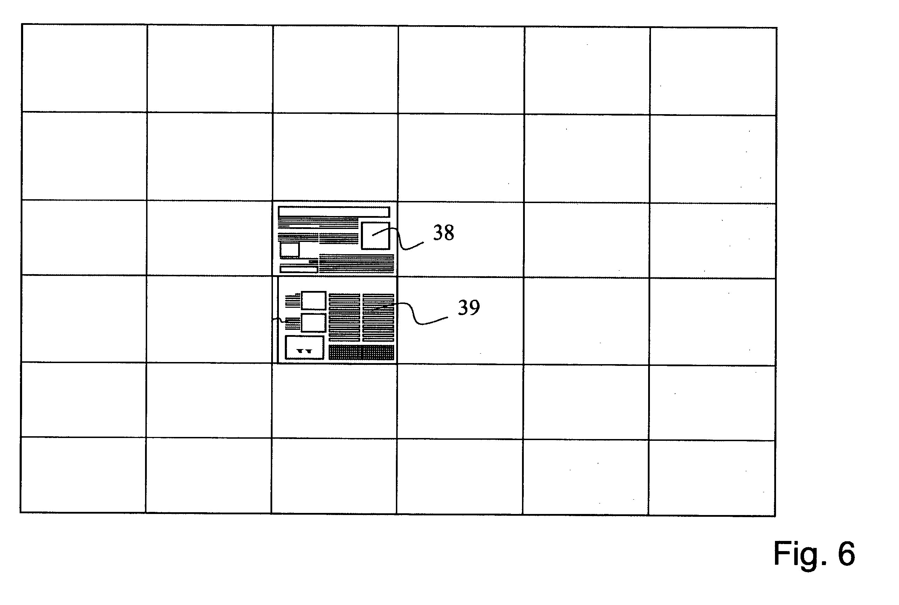

Fig. 6 zeigt eine schematische Darstellung eines kompletten DTA/V Dokumentes mit den Zeitungsseiten von Fig. 4 und 5. Zu sehen ist eine Vielzahl einzelner Bereiche, die jeweils einer Zeitungsseite entsprechen. Stellvertretend ist die Zeitungsseite von Fig. 4 mit dem Bezugszeichen 38 und die Zeitungsseite von Fig. 5 mit dem Bezugszeichen 39 in der Figur gekennzeichnet. Die Zeitungsseite 38 ist bei dem gezeigten DTA/V Dokument die Startseite, die bei Aufruf des Dokumentes zuerst als ausgewählter Bereich wiedergegeben wird. Ausgehend von hier kann der Nutzer verschieben oder blättern. Beispielsweise kann als nächstes die Zeitungsseite 39 wiedergegeben werden.

### Bezugszeichenliste:

- 10: Bereitstellungseinheit
- 11: breitbandige Verbindung
- 12: Wiedergabeeinheit
- 13: Set-Top-Box
- 14: Fernsehgerät
- 15: Schmalbandige Verbindung
- 16: Vermittlungsstelle
- 17: erste Rückverbindung
- 18: zweite Rückverbindung
- 19: Verrechnungseinheit
- 20: weitere Verbindung
- 21: Fernbedienung
- 22: Verbindung
- 23: Schlagzeile
- 24: Internetadresse
- 25: Graphik
- 26: Bild
- 27: Artikel
- 28: E-Mail-Adresse
- 29: Werbeanzeige
- 30: bewegte Graphik
- 31: elektronische Programmübersicht
- 32: Programmeinträge
- 33: Beschreibung
- 34: Bild
- 35: Bild
- 36: Kreuzworträtsel
- 37: Werbespot
- 38: Startseite
- 39: weitere Seite

## Patentansprüche

1. Verfahren zum Betreiben einer interaktiven Zeitung, bei dem Informationen mehrerer wiederzugebender Bereiche von einer Bereitstellungseinheit (10) an eine Wiedergabeeinheit (12) bei einem Nutzer übertragen werden, bei dem Informationen zur Darstellung eines ausgewählten Bereichs ausgewählt werden, und bei dem der ausgewählte Bereich auf einer Wiedergabeeinheit (12) wiedergegeben wird, **dadurch gekennzeichnet, daß** die Informationen der mehreren Bereiche mittels einer Verknüpfung fest miteinander verknüpft sind.

2. Verfahren nach Anspruch 1, **dadurch gekennzeichnet, daß** die Verknüpfung die Informationen zu einem Dokument ähnlich dem Desktop Publishing (DTP) verknüpft.

3. Verfahren nach Anspruch 1 oder 2, **dadurch gekennzeichnet, daß** die Verknüpfung Schnittstellen für verschiedene Text-, Audio- und Videoformate aufweist.

4. Verfahren nach einem der vorhergehenden Ansprüche, **dadurch gekennzeichnet, daß** die Verknüpfung horizontal ist.

5. Verfahren nach einem der vorhergehenden Ansprüche, **dadurch gekennzeichnet, daß** die Informationen mittels einer breitbandigen Verbindung (11) übertragen werden.

6. Verfahren nach Anspruch 5, **dadurch gekennzeichnet, daß** die breitbandige Verbindung (11) eine Verbindung mittels Kabel oder Satellit ist.

7. Verfahren nach einem der vorhergehenden Ansprüche, **dadurch gekennzeichnet, daß** die verknüpften Informationen als Fernsehbilder übertragen werden.

8. Verfahren nach einem der vorhergehenden Ansprüche, **dadurch gekennzeichnet, daß** die verknüpften Informationen auf Speichermitteln gespeichert werden.

9. Verfahren nach einem der vorhergehenden Ansprüche, **dadurch gekennzeichnet, daß** die Informationen zu einer vorgegebenen ersten Zeit übertragen werden.

10. Verfahren nach einem der vorhergehenden Ansprüche, **dadurch gekennzeichnet, daß** der Nutzer mittels Auswahlmitteln (21) einen Bereich als ausgewählten Bereich auswählt.

11. Verfahren nach einem der vorhergehenden Ansprüche, **dadurch gekennzeichnet, daß** die Auswahlmittel (21) eine Fernbedienung oder eine Tastatur sind.

12. Verfahren nach einem der vorhergehenden Ansprüche, **dadurch gekennzeichnet, daß** bei einer neuen Auswahl eines Bereiches gemeinsame Elemente beibehalten und nur neu wiederzugebende Elemente neu wiedergegeben werden.

13. Verfahren nach einem der vorhergehenden Ansprüche, **dadurch gekennzeichnet, daß** Nutzerdaten mittels einer schmalbandigen Rückverbindung (15,17,18) von der Wiedergabeeinheit (12) an die Bereitstellungseinheit (10) übertragen werden.

14. Verfahren nach Anspruch 13, **dadurch gekennzeichnet, daß** die Nutzerdaten Abrechnungsdaten sind, mittels derer die übertragenen Informationen und/oder die wiedergegebenen Informationen bezahlt werden.

15. Verfahren nach Anspruch 13, **dadurch gekennzeichnet, daß** die Nutzerdaten Anforderungsdaten zum Anfordern der Übertragung von Informationen sind.

16. Verfahren nach einem der vorhergehenden Ansprüche, **dadurch gekennzeichnet, daß** Informationen für mehrere interaktive Zeitungen übertragen werden, und daß der Nutzer mittels der Auswahlmittel eine interaktive Zeitung auswählt.

17. Verfahren nach einem der vorhergehenden Ansprüche, **dadurch gekennzeichnet, daß** mittels eines der Wiedergabeeinheit (12) zugeordneten GPS-Modules die Position der Wiedergabeeinheit (12) bestimmt wird und abhängig von diesem Bestimmen lokal gültige Informationen übertragen werden.

18. Verfahren nach einem der vorhergehenden Ansprüche, **dadurch gekennzeichnet, daß** mittels einer Suchmaschine eine Auswahl der wiedergegebenen Informationen getroffen wird.

19. Verfahren nach einem der vorhergehenden Ansprüche, **dadurch gekennzeichnet, daß** das Auswählen der Informationen mittels einer Navigationshilfe erfolgt.

20. Verfahren nach einem der Ansprüche 14 bis 19, **dadurch gekennzeichnet, daß** das Bezahlen mittels einer in einen der Wiedergabeeinheit (12) zugeordneten Kartenleser eingeführten Geldkarte oder Kreditkarte erfolgt.

21. Verfahren nach einem der vorhergehenden Ansprüche, **dadurch gekennzeichnet, daß** die ausgewählten Informationen nach aktiven Elementen (23, 30, 37) durchsucht werden, und daß beim Vorhandensein eines aktiven Elementes (23, 30, 37) dieses ausgeführt wird.

22. Verfahren nach einem der vorhergehenden Ansprüche, **dadurch gekennzeichnet, daß** in den ausgewählten Informationen enthaltene ausführbare Elemente (24, 25, 26, 27, 28, 32, 34, 35, 36) mittels Auswahl mit den Auswahlmitteln (21) ausführbar sind.

23. Verfahren nach Anspruch 22, **dadurch gekennzeichnet, daß** vor dem Ausführen eines kostenpflichtigen Elementes (32) eine kostenlose Vorschau erfolgt.
